# EUROPEAN PATENT SPECIFICATION

(11) **EP 1 935 054 B1**
(45) Date of publication and mention of the grant of the patent: **24.12.2014**
(21) Application number: 06794135.1
(22) Date of filing: 28.09.2006
(51) Int. Cl.: H01Q 9/04, H01Q 9/42, H01Q 1/24, H01Q 5/00

(54) **ADJUSTABLE ANTENNA**
EINSTELLBARE ANTENNE
ANTENNE AJUSTABLE

(30) Priority: 14.10.2005 FI 20055554; 15.02.2006 FI 20065116
(43) Date of publication of application: 25.06.2008
(73) Proprietor: Pulse Finland Oy, 90440 Kempele (FI)
(72) Inventor: MILOSAVLJEVIC, Zlatoljub, 90440 Kempele (FI); ISOHÄTÄLÄ, Anne, 90820 Kello (FI); MIKKOLA, Jyrki, 69600 Kaustinen (FI)
(74) Representative: Määttä, Jukka Tapani
(86) International application number: PCT/FI2006/050418
(87) International publication number: WO 2007/042615

(56) References cited:
- EP-A1- 1 361 623
- EP-A1- 1 361 623
- WO-A1-2004/036778
- WO-A1-2005/011055
- WO-A1-2005/011055
- WO-A2-2004/057697
- US-A- 4 313 121
- US-A- 4 313 121
- US-A1- 2002 044 092
- US-A1- 2004 066 336
- US-A1- 2004 075 614

## Description

The invention relates to an adjustable antenna especially intended for mobile terminals.

The adjustability of an antenna means in this description that a resonance frequency of the antenna can be changed electrically. The aim is that the operating band of the antenna around the resonance frequency always covers the frequency range, which the function presumes at each time. There are different causes for the need for adjustability. As portable radio devices, like mobile terminals, are becoming smaller thickness-wise, too, the distance between the radiating plane and the ground plane of an internal planar antenna unavoidably becomes shorter. This results in e.g. that the antenna bandwidths will decrease. Then, as a mobile terminal is intended for operating in a plurality of radio systems having frequency ranges relatively close to each other, it becomes more difficult or impossible to cover frequency ranges used by more than one radio system. Such a system pair is for instance GSM1800 and GSM1900 (Global System for Mobile telecommunications). Correspondingly, securing the function that conforms to specifications in both transmitting and receiving bands of a single system can become more difficult. If the system uses sub-band division, it is advantageous, from the point of view of the radio connection quality, if the resonance frequency of the antenna can be tuned in a sub-band being used at each time.

Prior art document US 4313121 describes a compact monopole antenna with structured top load.

In the invention described here the antenna adjusting is implemented by a switch. The use of switches for the purpose in question is well known as such. For example the publication EP1 113 524 discloses an antenna, where a planar radiator can at a certain point be connected to the ground by a switch. When the switch is closed, the electric length of the radiator is decreased, in which case the antenna resonance frequency becomes higher and the operating band corresponding to the resonance frequency is displaced upwards. A capacitor can be in series with the switch to set the band displacement as large as desired. In this solution the adjusting possibilities are very limited.

In Fig. 1 there is a solution including a switch, known from the publication EP 1 544 943. Of the antenna base structure, only the radiator 120 is drawn in the figure, which radiator can be a part of a larger radiating plane. The antenna comprises, in addition to the base structure, an adjusting circuit with a parasitic element 131, a transmission line 132, a two-way switch 133, a first reactive circuit X1 and a second reactive circuit X2. The head end of the first conductor of the transmission line is connected to the parasitic element, and the head end of the second conductor is connected to the ground. In practice, the second conductor can belong to the ground plane, which as such has no head and tail end. Each reactive circuit includes for example two or three reactive components. The transmission line 132 will be terminated, depending on the switch state, by one of the reactive circuits. When the switch is controlled so that its state changes, the electric length and resonance frequency of a certain part of the antenna change. This means that the corresponding operating band is displaced.

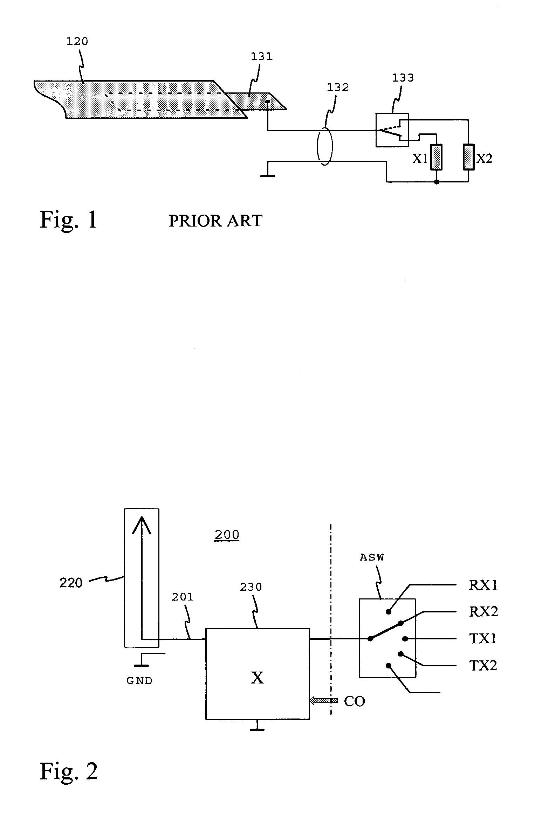

The solution according to Fig. 1 is intended for a multi-band antenna. In it the influence of the adjusting can be directed, when needed, only on one operating band of the antenna, and a good impedance matching can be arranged for the antenna in the band to be displaced. These matters are due to that there are several variables when designing the adjusting circuit. However, the solution is suitable only for the antennas of PIFA type, and the parasitic element used in it increases the structure costs.

The object of the invention is to implement the adjusting of an antenna in a new and advantageous way. An adjustable antenna according to the invention is characterized in that which is specified in the independent claim 1. Some advantageous embodiments of the invention are presented in the dependent claims

The basic idea of the invention is as follows: An antenna of monopole type is provided with an adjusting circuit to change its resonance frequency and thus the place of its operating band. In this case the operating band covers at a time only a part of a frequency range used by one or two radio systems. The adjusting circuit is located between the radiator and the antenna port/switch of a radio device and forms, together with the antenna feed conductor, a feed circuit. This circuit comprises an adjustable reactance between the feed conductor and the ground or in series with the feed conductor or in both of those places. For example, the feed conductor can be connected by a multiple-way switch to one of alternative transmission lines, which are typically short-circuited or open at their tail end and shorter than the quarter wave, each line acting for a certain reactance. The lengths of the transmission lines and the values of the possible discrete components then are variables from the point of view of the antenna adjusting.

An advantage of the invention is that the space required for an antenna according to it is very small due to the monopole structure. Despite its small size, a basic antenna having a relatively narrow band functions in practice as a broad band antenna, because only a part of this broad band is needed at a time. In addition, a good matching and efficiency are achieved over the whole width of the band, because the matching of a relatively narrowband antenna can be arranged more comfortably than of a real broadband antenna. A further advantage of the invention is that also the space required for the adjusting circuit of the antenna is relatively small. This is due to that physically very short transmission lines are adequate in the adjusting circuit according to the invention. A still further advantage of the invention is that the adjusting according to it does not require arrangement of a coupling to the antenna radiator, which means a simpler antenna structure and thus savings in production costs.

The invention is below described in detail. Reference will be made to the accompanying drawings where
- Fig. 1: presents an example of an adjustable antenna according to the prior art,
- Fig. 2: presents a principled structure of an antenna according to the invention,
- Fig. 3: presents as a block diagram an example of an adjusting circuit of an antenna according to the invention,
- Fig. 4: presents another example of an adjusting circuit of an antenna according to the invention,
- Fig. 5: presents a third example of an adjusting circuit of an antenna according to the invention,
- Fig. 6: presents a fourth example of an adjusting circuit of an antenna according to the invention,
- Fig. 7: presents as a circuit diagram an example of the implementation of an adjusting circuit according to Fig. 3,
- Fig. 8: presents an example of the implementation of the adjusting circuit according to Fig. 7 by a circuit board,
- Fig. 9: presents an example of the wholeness of an antenna according to the invention,
- Fig. 10: presents an example of the displacement of an operating band of an antenna according to the invention, when the adjusting circuit is controlled,
- Fig. 11: presents as a Smith diagram an example of the impedance of an adjusting circuit of an antenna according to the invention, and
- Fig. 12: presents an example of the gain of an antenna according to the invention.

Fig. 1 was already described in conjunction with the description of the prior art.

Fig. 2 shows the principled structure of an antenna according to the invention as a simple block diagram. The radiator 220 of an antenna 200 is of monopole type. Also the feed conductor 201 and the adjusting circuit 230 of the antenna are here included in the antenna. Naturally also the common signal ground GND, necessary in the function of the structure, belongs to it. The feed conductor has been connected to the radiator at its one end and to the rest of the radio device in question at its other end. In the example of Fig. 2 the radio device has the transmitters TX1, TX2 and receivers RX1, RX2 in compliance with two different systems, and its function is time divisional. For this reason the feed conductor is connected the transmitters and receivers through the antenna switch ASW. The adjusting circuit 230 engages the feed conductor 201 and forms together with it a feed circuit. The adjusting circuit is reactive by nature to avoid losses, and it receives a control CO from the radio device. A reactance value influencing in the circuit is altered by that control so that a resonance frequency of the antenna and along with it the place of an operating band change as desired.

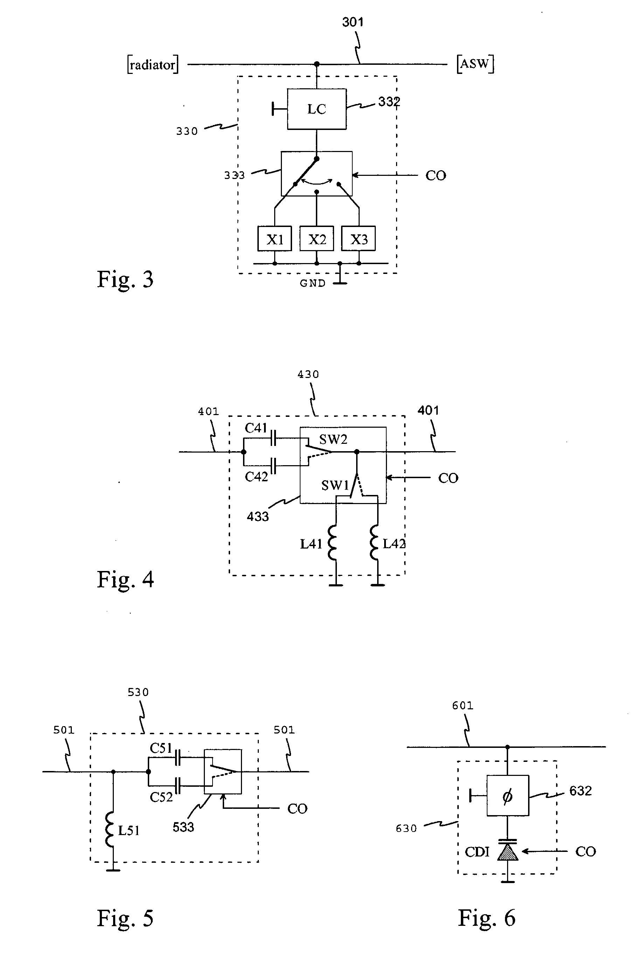

There is at least one node pair in the feed circuit, the reactance between which nodes can be altered by the control CO. One node of the pair is located along the feed conductor, and the other node can be located in the signal ground or at another point of the feed conductor. In the latter case the reactance to be altered is in series with the feed conductor. In all cases there is a reactive circuit, adjustable or constant, between the feed conductor and signal ground. Examples of the feed circuit are in Figs. 3-6.

In Fig. 3 there is as a block diagram an adjusting circuit according to the invention, where the adjusting circuit 330 has been connected between the antenna feed conductor 301 and the signal ground GND. The adjusting circuit comprises an LC circuit 332, a multiple-way switch 333 and three alternative reactive structure parts X1, X2, X3. The LC circuit has been connected to the feed conductor at its one end and to the switch input at its other end. Its aim is to attenuate the harmonic frequency components being generated in the switch and to function as an electrostatic discharge (ESD) protector of the switch. The switch 333 has three outputs, to one of which the switch input can be connected at a time by the control CO. Each output of the switch has been fixedly connected to one of said reactive structure parts, the reactances of which exist against the signal ground. The interchanging of the reactance by controlling the switch changes the resonance frequency of the antenna and thus the place of its operating band. The operating band of the antenna then has three alternative places in this example.

In Fig. 4 there is a feed circuit according to the invention, the adjusting circuit 430 of which comprises a part between the feed conductor 401 and the signal ground and another part in series with the feed conductor. The former part is located before the latter part, as seen from the antenna port/switch. Both parts are adjustable in this example. The part between the feed conductor and signal ground comprises a two-way switch SW1 and two inductive structure parts L41 and L42. Depending on the state of the switch SW1, one of the inductive structure parts L41, L42 is connected from the feed conductor to the signal ground. The part in series comprises another two-way switch SW2 and two capacitive structure parts C41 and C42. Depending on the state of the switch SW2, one of the capacitive structure parts C41, C42 is connected in series with the feed conductor 401. The two-way switches SW1 and SW2 together form a switching unit 433, which is controlled by the control signals CO. If the controls of the two-way switches are distinct, four alternative places are in principle obtained for the antenna operating band.

In Fig. 5 there is a feed circuit according to the invention, the adjusting circuit 530 of which comprises a part between the feed conductor 501 and the signal ground and another part in series with the feed conductor. The former part is located after the latter part, as seen from the antenna port/switch, and only the part in series is adjustable. The part between the feed conductor and signal ground consists of an inductive structure part L51. The part in series comprises a two-way switch 533 and two capacitive structure parts C51 and C52. Depending on the state of the switch 533, one of the capacitive structure parts C51, C52 is connected in series with the feed conductor 501. The switch is controlled by the control signal CO. In this case the antenna operating band has two alternative places.

The inductive structure part can be located at antenna port's side of the part in series with the feed conductor instead of the radiator's side of the part in series as presented in Fig. 5. Inside the part in series the order of the two-way switch and capacitive structure parts can be any, in other words the two-way switch can be located also at radiator's side of the capacitive structure parts.

In Fig. 6 there is a feed circuit according to the invention, the adjusting circuit 630 of which comprises only a part between the feed conductor 601 and the signal ground. That part consists of a phase shifter 632 and a capacitance diode CDI, which are in series. The adjustment takes place by controlling the capacitance diode by the control signal CO, which can be continuous in this example. The antenna operating band can then be displaced continuously in a defined total range. By designing the phase shifter suitably, the adjustment range of the reactance of the adjusting circuit can be shifted as desired. For example, it can be shifted wholly to the inductive side.

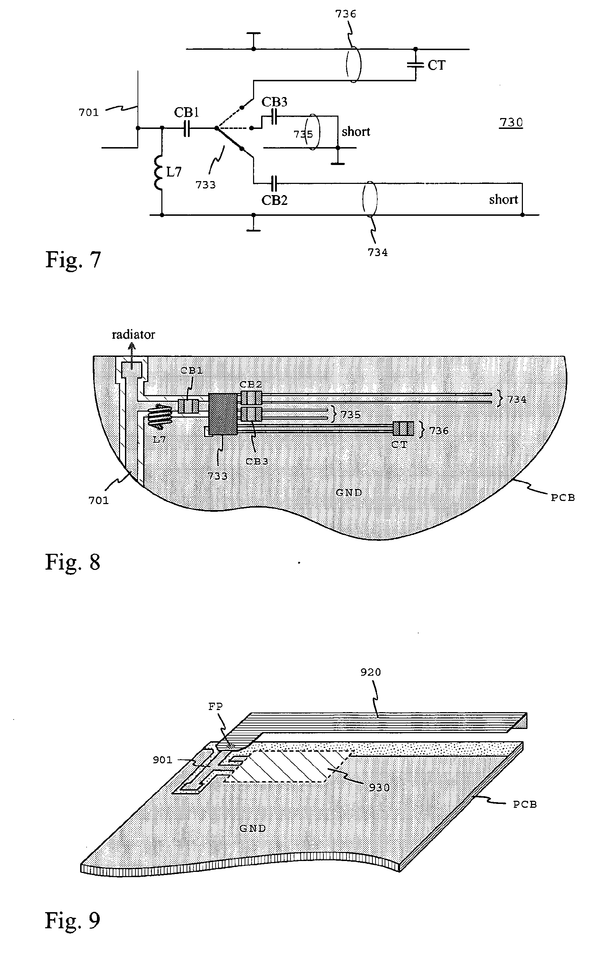

Fig. 7 shows as a circuit diagram an example of the implementing of an adjusting circuit according to Fig. 3. Said LC circuit comprises a coil L7 connected between the input conductor of the adjusting circuit 730 and the signal ground and a capacitor CB1 in series with the input conductor of the adjusting circuit, which input conductor is connected to the antenna feed conductor 701. The capacitor CB1 functions also as a blocking capacitor preventing the forming of a direct current circuit through the antenna feed conductor as seen from the control circuit of the switch of the adjusting circuit. One terminal of the capacitor CB1 has been connected to the input of the switch 733. The reactive structure parts connected to the three outputs of the switch are implemented by short transmission lines, each of which comprising a ground conductor and another conductor insulated from the ground, which conductor is here called a separate conductor. An open transmission line shorter than the quarter wave represents a certain capacitance, and the short-circuited line represents a certain inductance. These transmission lines, which implement the alternative reactances, are called tuning lines. In this example the first tuning line 734 is short-circuited at its tail end, the second tuning line 735 is short-circuited as well at its tail end and the third tuning line 736 is terminated by a discrete tuning capacitor CT at its tail end. A blocking capacitor CB2 is at the head end of the separate conductor of the short-circuited first tuning line to prevent the forming of a direct current circuit through the tuning line and the control circuit of the switch. For same reason there is a blocking capacitor CB3 at the head end of the separate conductor of the second tuning line.

Fig. 8 shows an example of the implementation of the adjusting circuit according to Fig. 7 by a circuit board. The upper surface of the circuit board PCB is mostly conductive ground plane GND functioning as the signal ground. The feed conductor 701 of the antenna is a conductor strip on the surface of the circuit board continuing to a monopole radiator from an edge of the circuit board. The input conductor of the adjusting circuit is a conductor strip, which branches from the feed conductor. Said coil L7 and capacitor CB1 are discrete components. The switch 733 is an integrated component. The switching parts are type of FET (Field Effect Transistor), PHEMT (Pseudomorphic High Electron Mobility Transistor) or MEMS (Micro Electro Mechanical System), for example. The switch is controlled from the opposite side of the circuit board through a via. The tuning lines 734, 735, 736 are planar transmission lines on the surface of the circuit board. A short-circuited line is produced, when the tail end of the separate conductor of the line joins the surrounding ground plane.

Fig. 9 shows an example of the wholeness of an antenna according to the invention. A portion of the circuit board PCB of a radio device is seen in the figure. The monopole radiator 920 is a plate-like and rigid sheet metal strip. It has been connected to the antenna feed conductor 901 at the feed point FP being located near a corner of the circuit board. The radiator is directed first from that point over the edge of the end of the circuit board outside the board and turns after that, onwards level with the upper surface of the circuit board, in the direction of the end. On the circuit board there is the signal ground GND at a certain distance from the radiator 920. The antenna of the example is then an ILA (Inverted L-antenna), which is a version of the monopole antenna. The radiator has a perpendicular fold part at the outer edge of the portion along the end of the circuit board to increase its electric length. On the circuit board, in the end on the radiator side, there is the adjusting circuit 930 of the antenna. It has been presented only as an area confined by a broken line in Fig. 9.

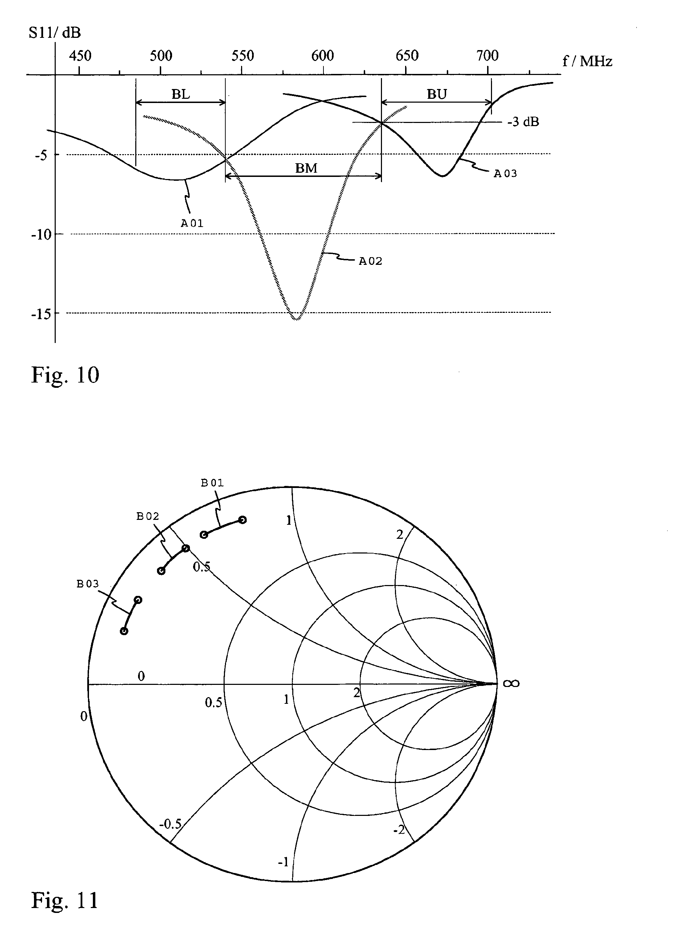

Fig. 10 shows an example of the displacement of an operating band of an antenna according to the invention, when the adjusting circuit is controlled. The example relates to the antenna comprising an adjusting circuit according to Fig. 8. The first tuning line 734 of the antenna is 17 mm long, the second tuning line 735 is 1.5 mm long and the third tuning line 736 is 3.5 mm long. The capacitance of the tuning capacitor CT is 10 pF. The circuit board material is FR-4, the dielectric constant of which is about 4.5. The antenna has been designed for the DVB-H system (Digital Video Broadcasting), which uses the frequency range 470-702 MHz. Curve A01 shows fluctuation of the reflection coefficient as a function of frequency, when the feed conductor is connected to the first tuning line, curve A02 shows fluctuation of the reflection coefficient, when the feed conductor is connected to the second tuning line and curve A03 shows fluctuation of the reflection coefficient, when the feed conductor is connected to the third tuning line. From the curves can be seen that the above-mentioned frequency range will be covered so that the reflection coefficient is -3 dB or better apart from just the upper end of the range. The use of the first tuning line is most advantageous in the lower band BL, 470-540 MHz, the use of the second tuning line in the middle band BM, 540-635 MHz and the use of the third tuning line in the upper band BU, 635-702 MHz. The measured antenna with its adjusting circuit is a prototype and can be improved by a more accurate design.

Fig. 11 shows as a Smith diagram an example of the impedance of the adjusting circuit of an antenna according to the invention. The example relates to the same structure as the matching curves in Fig. 10. Curve B01 shows fluctuation of the impedance as a function of frequency, when the radiator is connected to the first tuning line, curve B02 shows fluctuation of the impedance, when the radiator is connected to the second tuning line and curve B03 shows fluctuation of the impedance, when the radiator is connected to the third tuning line. The ends of the curves correspond to the boundary frequencies of the above-mentioned bands BL, BM and BU. In an ideal case the curves would be situated on the outer circle of the diagram, which case would correspond to a lossless case. In practice the adjusting circuit is not lossless, of course. However, the resistive proportion of the impedances is small, order of 5Ω, when the characteristic impedance of the lines is 50Ω. It can be seen from the diagram that the impedance of all tuning lines is inductive. The third tuning line 736 would be capacitive as open, but terminating the line by the 10 pF capacitance converts it to sligthly inductive. A corresponding short-circuited line would be so short that it would not function correctly in practice.

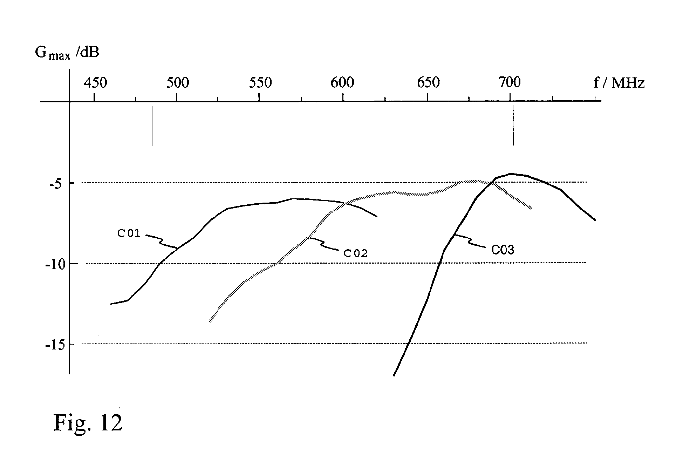

Fig. 12 shows an example of the gain of an antenna according to the invention. It relates to the maximum gain Gₘₐₓ or the gain in the most advantageous direction. The example concerns the same structure as the matching curves in Fig. 10. Curve C01 shows the fluctuation of the maximum gain as a function of frequency, when the radiator is connected to the first tuning line, curve C02 shows fluctuation of the maximum gain, when the radiator is connected to the second tuning line and curve C03 shows fluctuation of the maximum gain, when the radiator is connected to the third tuning line. It can be seen from the curves that the maximum gain fluctuates from -5 to -10 dB in most of the using range of each tuning line.

The adjustable monopole antenna according to the invention has been described above. Its structure can naturally differ in details from that presented. For example the number of the switch operating states and of the tuning lines or circuits corresponding those states can be also greater than three to implement more alternative places for the operating band. The reactive circuit from the feed conductor to the ground is advantageously inductive, but can also be capacitive. Correspondingly the possible series circuit is advantageously capacitive, but also can be inductive. The invention does not limit the manufacturing manner of the antenna radiator. The inventive idea can be applied in different ways within the scope defined by the independent claim 1.

## Claims

1. An adjustable antenna (200) comprising a monopole radiator (220; 920) with a single feed conductor (201; 301; 901) and an adjusting circuit (230; 330; 430; 530; 630) to displace an operating band of the antenna, which antenna has a signal ground (GND), **characterized in that** the adjusting circuit, which engages the single feed conductor, and said feed conductor together form a feed circuit of the antenna, that comprises a reactive circuit (XI, X2, X3) between the single feed conductor (301) and the signal ground and at one node pair where the reactance of the reactive circuit between the nodes of said one node pair can be altered to change a resonance frequency of the antenna, said one node of said one node pair being located at the feed conductor (301) and the other node of said one node pair being located in the signal ground (GND), and the circuit between them comprises a capacitance diode (CD1) to change the reactance of the circuit and a phase shifter (632) to shift the adjustment range of the reactance of the circuit.

2. An adjustable antenna (200) comprising a monopole radiator (220; 920) with a single feed conductor (201; 301; 901) and an adjusting circuit (230; 330; 430; 530; 630) to displaced an operating band of the antenna, which antenna has a signal ground GND), **characterized in that** the adjusting circuit, which engages the single feed conductor, and said feed conductor together form a feed circuit of the antenna, that comprises a reactive circuit (XI, X2, X3) between the single feed conductor (301) and the signal ground and at least one node pair where the reactance ot the reactive circuit between the nodes of said at least one node pair can be altered to change a resonance frequency of the antenna, the one node of said at least one node pair being located at the feed conductor (301) and the other node of said at least one node pair being located in the signal ground (GND), and the circuit between them comprises at least two inductive structure parts (XI, X2, X3) and a multiple-way switch (333) to constitute a connection between the feed conductor and signal ground through one inductive structure part at a time, said switch is of FET, PHEMT or MEMS type.

3. An antenna according to claim 2, **characterized in that** said inductive structure parts are short transmission lines (734, 735, 736).

4. An antenna according to claim 2, **characterized in that** said inductive structure parts are discrete coils.

5. An antenna according to claim 2, **characterized in that** the number of said node pairs is one, each node of which pair is located at the feed conductor (501), in which case the circuit between the nodes is in series with the feed conductor and comprises at least two capacitive structure parts (C51, C52) and a multiple-way switch (533) to constitute a connection between the nodes through one capacitive structure part at a time, and said reactive circuit between the teed conductor and signal ground is a fixedly connected coil (L51).

6. An antenna according to claim 2, **characterized in that** the number of said node pairs is two, one node ot the first pair being located at the feed conductor (401) and the other node in the signal ground (GND), and the circuit between them comprises at least two inductive structure parts (L41, L42) and a multiple-way switch (SW 1) to constitute a connection between the feed conductor and signal ground through one inductive structure part at a time, and each node of the second pair being located at the feed conductor (401), in which case the circuit between these nodes is in series with the feed conductor and comprises at least two capacitive structure parts (C41, C42) and a multiple-way switch (SW2) to constitute a connection between these nodes through one capacitive structure part at a time.

7. An antenna according to claim 3, **characterized in that** the number of said short transmission lines is three, and the operating bands corresponding them cover together the frequency range 470—702 MHz of the DVB-H system.

8. An antenna according to claim 2, **characterized in that** its adjusting circuit further comprises an LC circuit (332) between the teed conductor and said switch at least to protect the switch against the ESD.

9. An antenna according to claims 1 or 2, **characterized in that** the antenna is of ILA type.

## Patentansprüche

1. Einstellbare Antenne (200), enthaltend einen Monopolstrahler (220; 920) mit einem einzelnen Versorgungsleiter (201; 301; 901) und einer Einstellschaltung (230; 330; 430; 530; 630), um ein Betriebsband der Antenne zu verstellen, wobei die Antenne eine Signalerdung (GND) hat, **dadurch gekennzeichnet, dass** die Einstellschaltung, die mit dem einzelnen Versorgungsleiter in Eingriff ist, und der Versorgungsleiter zusammen eine Versorgungsschaltung der Antenne bilden, die eine reaktive Schaltung (X1, X2, X3) zwischen dem einzelnen Versorgungsleiter (301) und der Signalerdung und ein Knotenpaar enthält, wobei die Reaktanz der reaktiven Schaltung zwischen den Knoten des einen Knotenpaares verändert werden kann, um eine Resonanzfrequenz der Antenne zu ändern, wobei der eine Knoten des besagten einen Knotenpaares an dem Versorgungsleiter (301) angeordnet ist und der andere Knoten des besagten einen Knotenpaares an der Signalerdung (GND) angeordnet ist, und die Schaltung zwischen ihnen eine Kapazitätsdiode (CD1) zum Ändern der Reaktanz der Schaltung und einen Phasenschieber (632) zum Verschieben des Einstellbereichs der Reaktanz der Schaltung enthält.

2. Einstellbare Antenne (200), enthaltend einen Monopolstrahler (220; 920) mit einem einzelnen Versorgungsleiter (201; 301; 901) und einer Einstellschaltung (230; 330; 430; 530; 630), um ein Betriebsband der Antenne zu verstellen, wobei die Antenne eine Signalerdung (GND) hat, **dadurch gekennzeichnet, dass** die Einstellschaltung, die mit dem einzelnen Versorgungsleiter in Eingriff ist, und der Versorgungsleiter zusammen eine Versorgungsschaltung der Antenne bilden, die eine reaktive Schaltung (X1, X2, X3) zwischen dem einzelnen Versorgungsleiter (301) und der Signalerdung und wenigstens ein Knotenpaar enthält, wobei die Reaktanz der reaktiven Schaltung zwischen den Knoten des wenigstens einen Knotenpaares verändert werden kann, um eine Resonanzfrequenz der Antenne zu ändern, wobei der eine Knoten des besagten wenigstens einen Knotenpaares an dem Versorgungsleiter (301) angeordnet ist und der andere Knoten des besagten wenigstens einen Knotenpaares an der Signalerdung (GND) angeordnet ist, und die Schaltung zwischen ihnen wenigstens zwei induktive Strukturteile (X1, X2, X3) und einen Mehrwegschalter (333) enthält, um zu jeder Zeit eine Verbindung zwischen dem Versorgungsleiter und der Signalerdung durch ein induktives Strukturteil zu bilden, wobei der Schalter vom FET-, PHEMT- oder MEMS-Typ ist.

3. Antenne nach Anspruch 2, **dadurch gekennzeichnet, dass** die induktiven Strukturteile kurze Übertragungsleitungen (734, 735, 736) sind.

4. Antenne nach Anspruch 2, **dadurch gekennzeichnet, dass** die induktiven Strukturteile diskrete Spulen sind.

5. Antenne nach Anspruch 2, **dadurch gekennzeichnet, dass** die Anzahl der Knotenpaare eins ist, jeder Knoten von diesem Paar an dem Versorgungsleiter (501) angeordnet ist, wobei in diesem Fall die Schaltung zwischen den Knoten in Reihe mit dem Versorgungsleiter ist und wenigstens zwei kapazitive Strukturteile (C51, C52) und einen Mehrwegschalter (533) enthält, um zu jeder Zeit eine Verbindung zwischen den Knoten durch ein kapazitives Strukturteil zu bilden, und die reaktive Schaltung zwischen dem Versorgungsleiter und der Signalerdung eine fest verbundene Spule (L51) ist.

6. Antenne nach Anspruch 2, **dadurch gekennzeichnet, dass** die Anzahl der Knotenpaare zwei ist, ein Knoten des ersten Paares an dem Versorgungsleiter (401) und der andere Knoten in der Signalerdung (GND) angeordnet ist, und die Schaltung zwischen ihnen wenigstens zwei induktive Strukturteile (L41, L42) und einen Mehrwegschalter (SW1), um zu jeder Zeit eine Verbindung zwischen dem Versorgungsleiter und der Signalerdung durch ein induktives Strukturteil zu bilden, und jeder Knoten des zweiten Paares an dem Versorgungsleiter (401) angeordnet ist, wobei in diesem Fall die Schaltung zwischen diesen Knoten in Reihe mit dem Versorgungsleiter ist und wenigstens zwei kapazitive Strukturteile (C41, C42) und einen Mehrwegschalter (SW2) enthält, um zu jeder Zeit eine Verbindung zwischen diesen Knoten durch ein kapazitives Strukturteil zu bilden.

7. Antenne nach Anspruch 3, **dadurch gekennzeichnet, dass** die Anzahl der kurzen Übertragungsleitungen drei ist und die ihnen entsprechenden Betriebsbänder zusammen einen Frequenzbereich von 470 bis 702 MHz des DVB-H-Systems abdecken.

8. Antenne nach Anspruch 2, **dadurch gekennzeichnet, dass** ihre Einstellschaltung ferner eine LC-Schaltung (332) zwischen dem Versorgungsleiter und dem Schalter enthält, zumindest um den Schalter gegen die ESD zu schützen.

9. Antenne nach Anspruch 1 oder 2, **dadurch gekennzeichnet, dass** die Antenne vom ILA-Typ ist.

## Revendications

1. Antenne ajustable (200) comprenant un élément rayonnant monopolaire (220 ; 920) avec un conducteur de source (201 ; 301 ; 901) unique et un circuit d'ajustement (230 ; 330 ; 430 ; 530 ; 630) pour déplacer une bande de fonctionnement de l'antenne, laquelle antenne a une masse de signal (GND), **caractérisée en ce que** le circuit d'ajustement, qui est en prise avec le conducteur de source unique, et ledit conducteur de source forment l'un avec l'autre un circuit de source de l'antenne, qui comprend un circuit réactif (X1, X2, X3) entre le conducteur de source (301) unique et la masse de signal et une paire de noeuds où la réactance du circuit réactif entre les noeuds de ladite une paire de noeuds peut être modifiée pour changer une fréquence de résonance de l'antenne, ledit un noeud de ladite une paire de noeuds étant situé au niveau du conducteur de source (301) et l'autre noeud de ladite une paire de noeuds étant situé dans la masse de signal (GND), et le circuit entre eux comprend une diode à capacitance (CD1) pour changer la réactance du circuit et un déphaseur (632) pour décaler la plage d'ajustement de la réactance du circuit.

2. Antenne ajustable (200) comprenant un élément rayonnant monopolaire (220 ; 920) avec un conducteur de source (201 ; 301 ; 901) unique et un circuit d'ajustement (230 ; 330 ; 430 ; 530 ; 630) pour déplacer une bande de fonctionnement de l'antenne, laquelle antenne a une masse de signal (GND), **caractérisée en ce que** le circuit d'ajustement, qui est en prise avec le conducteur de source unique, et ledit conducteur de source forment l'un avec l'autre un circuit de source de l'antenne, qui comprend un circuit réactif (X1, X2, X3) entre le conducteur de source (301) unique et la masse de signal et au moins une paire de noeuds où la réactance du circuit réactif entre les noeuds de ladite au moins une paire de noeuds peut être modifiée pour changer une fréquence de résonance de l'antenne, ledit un noeud de ladite au moins une paire de noeuds étant situé au niveau du conducteur de source (301) et l'autre noeud de ladite au moins une paire de noeuds étant situé dans la masse de signal (GND), et le circuit entre eux comprend au moins deux parties de structure inductives (X1, X2, X3) et un commutateur à sélections multiples (333) pour constituer une connexion entre le conducteur de source et la masse de signal par l'intermédiaire d'une partie de structure inductive à un instant, ledit commutateur étant du type FET, PHEMT ou MEMS.

3. Antenne selon la revendication 2, **caractérisée en ce que** lesdites parties de structure inductives sont de courtes lignes de transmission (734, 735, 736).

4. Antenne selon la revendication 2, **caractérisée en ce que** lesdites parties de structure inductives sont des bobines discrètes.

5. Antenne selon la revendication 2, **caractérisée en ce que** le nombre desdites paires de noeuds est un, chaque noeud de cette paire est situé au niveau du conducteur de source (501), auquel cas le circuit entre les noeuds est en série avec le conducteur de source et comprend au moins deux parties de structure capacitives (C51, C52) et un commutateur à sélections multiples (533) pour constituer une connexion entre les noeuds par l'intermédiaire d'une partie de structure capacitive à un instant, et ledit circuit réactif entre le conducteur de source et la masse de signal est une bobine connectée de manière fixe (L51).

6. Antenne selon la revendication 2, **caractérisée en ce que** le nombre desdites paires de noeuds est deux, un noeud de la première paire étant situé au niveau du conducteur de source (401) et l'autre noeud dans la masse de signal (GND), et le circuit entre eux comprend au moins deux parties de structure inductives (L41, L42) et un commutateur à sélections multiples (SW1) pour constituer une connexion entre le conducteur de source et la masse de signal par l'intermédiaire d'une partie de structure inductive à un instant, et chaque noeud de la deuxième paire étant situé au niveau du conducteur de source (401), auquel cas le circuit entre ces noeuds est en série avec le conducteur de source et comprend au moins deux parties de structure capacitives (C41, C42) et un commutateur à sélections multiples (SW2) pour constituer une connexion entre ces noeuds par l'intermédiaire d'une partie de structure capacitive à un instant.

7. Antenne selon la revendication 3, **caractérisée en ce que** le nombre desdites courtes lignes de transmission est trois, et les bandes de fonctionnement correspondant à celles-ci couvrent, ensemble, la plage de fréquence de 470 à 702 MHz du système DVB-H.

8. Antenne selon la revendication 2, **caractérisée en ce que** son circuit d'ajustement comprend en outre un circuit LC (332) entre le conducteur de source et ledit commutateur au moins pour protéger le commutateur contre une décharge électrostatique.

9. Antenne selon la revendication 1 ou 2, **caractérisée en ce que** l'antenne est du type ILA.
